# EUROPEAN PATENT SPECIFICATION

(11) **EP 1 830 522 B1**
(45) Date of publication and mention of the grant of the patent: **15.05.2013**
(21) Application number: 06025979.3
(22) Date of filing: 14.12.2006
(51) Int. Cl.: H04L 12/46, H04W 52/02, H04W 88/04, H04W 92/02, H04L 12/28

(54) **Bridging end point device supporting inter access point communication**
Brückenendpunktvorrichtung zur Unterstützung der Kommunikation zwischen Zugangspunkten
Mise à l'échelle de polarisation de couple d'un côté sur l'autre afin d'améliorer la dérive dans une transmission à quatre roues motrices programmable

(30) Priority: 01.03.2006 US 365102; 30.03.2006 US 394253; 05.05.2006 US 418644; 06.06.2006 US 448240; 27.07.2006 US 494680; 18.08.2006 US 506262; 26.09.2006 US 527139
(43) Date of publication of application: 05.09.2007
(73) Proprietor: Broadcom Corporation, Irvine, CA 92617 (US)
(72) Inventor: Bennett, James, 92672 San Clemente, CA (US)
(74) Representative: Jehle, Volker Armin

(56) References cited:
- EP-A1- 1 337 076
- WO-A-2005/008968
- US-A1- 2003 058 832
- US-A1- 2004 097 263
- US-A1- 2005 070 326

## Description

### [CROSS-REFERENCE TO RELATED APPLICATIONS]

The present application is a continuation-in-part of:

U.S. Utility Application Serial No. 11/365,102, filed March 1, 2006 and entitled "MULTIPLE NODE APPLICATIONS COOPERATIVELY MANAGING A PLURALITY OF PACKET SWITCHED NETWORK PATHWAYS," (PUB. No. 2007-0110080 A1);

U.S. Utility Application Serial No. 11/394,253, filed March 30, 2006 and entitled "NETWORK NODES COOPERATIVELY ROUTING TRAFFIC FLOW AMONGST WIRED AND WIRELESS NETWORK," (PUB. No. 2007-0110035 A1);

U.S. Utility Application Serial No. 11/418,644, filed May 5, 2006 and entitled "PATHWAY PARAMETER EXCHANGE BETWEEN ACCESS NETWORKS OF DIFFERING TYPES," (PUB. No. 2007-0109990 A1);

U.S. Utility Application Serial No. 11/448,240, filed June 6, 2006 and entitled "ACCESS POINT SUPPORTING DIRECT AND INDIRECT DOWNSTREAM DELIVERY BASED ON COMMUNICATION CHARACTERISTICS," (PUB. No. 2007-0109991 A1);

U.S. Utility Application Serial No. 11/494,680, filed July 27, 2006 and entitled "INDIRECT COMMAND PATHWAYS BETWEEN AN END POINT DEVICE AND A TARGET ACCESS POINT VIA A SECONDARY ACCESS POINT," (PUB. No. 2007-0109992 A1); and

U.S. Utility Application Serial No. 11/506,262, filed August 18, 2006 and entitled "PRIMARY PROTOCOL STACK HAVING A SECONDARY PROTOCOL STACK ENTRY POINT," (PUB. No. 2007-0110436 A1).

The present application claims priority to U.S. provisional application serial No. 60/736,889, filed November 14, 2005.

### BACKGROUND OF THE INVENTION

### 1. Field of the Invention

Various aspects of present invention relate to delivery of packet data from a node that belongs to a data network to a second node that belongs to a heterogeneous data network via an end point device.

### 2. Description of the Related Art

A computer, video game box, laptop, phone, PDA (Personal Digital Assistant) and many other types of terminals may be associated with a packet switched data network. The packet switched data network may be, for example, an EDGE (Enhanced Data Rates for GSM Evolution) network, GSM (Global System for Mobile Communications) network, CDMA (Code Division Multiple Access) network, IEEE (Institute of Electrical and Electronics Engineers) 802.11 network, Bluetooth, WiMax network, Internet, Intranet, satellite network, etc. A terminal exchanges data packets with the packet switched data network where the data packets typically comprise one or combination of real time and/or archived multimedia information such as text, audio, video, picture and control signal.

A wireless terminal may be associated with many types of communication networks, some being communicatively compatible with each other and others being communicatively incompatible with others. To associate, the terminal typically attaches itself with an access point in a packet switched data network. If for any reason the terminal detaches, any ongoing communication exchange via the access point may be lost.

Further limitations and disadvantages of conventional and traditional approaches will become apparent to one of ordinary skill in the art through comparison of such systems with various aspects of the present invention.

US 2003/0058832 A1 discloses a mobile device having network interfaces and operating as a gateway for communicating wirelessly with two different networks.

EP-A1-1 337 076 discloses a gateway server configured to receive access demands to an IP server from a cellular phone MS via a mobile packet communication network MPN, acquire information corresponding to the hostname included in the access demand, and relay the access demand to the IP server.

US 2004/0097263 A1 discloses a wireless network for enabling good communication, while reducing the electricity consumption of a portable terminal.

US 2005/0070326 A1 discloses a communication relay within a vehicle for routing communications from a mobile wireless device to a wide area wireless network, allowing the power consumption of the mobile device to be reduced.

WO 2005/008968 A1 discloses a wireless Internet access repeater configured to receive first communication type signals in a first frequency band from a wireless Internet access network. The received signals are converted into a second communication type format, are processed to be signals in a second frequency band, and are transmitted to a user terminal.

### BRIEF SUMMARY OF THE INVENTION

According to the invention, there is provided an intermediate routing node in a communication infrastructure as defined by independent claim 1. Further advantageous features of the invention are defined by the dependent claims.

An end point device interacts directly and indirectly with an upstream origin node and an upstream destination node and supports delivery of data packets from the upstream origin node to the upstream destination node via the end point device, substantially as shown in and/or described in connection with at least one of the figures, as set forth more completely in the claims.

A communication infrastructure is provided supporting data communication, the communication infrastructure comprising:
a first access network comprising a first intermediate routing node;
a second access network comprising a second intermediate routing node;
an end point device that has both a first radio circuitry and a second radio circuitry;
the first intermediate routing node being communicatively coupled to the first radio circuitry of the end point device;
the second intermediate routing node being communicatively coupled to the second radio circuitry of the end point device;
the first intermediate routing node generating data for the second intermediate node;
the first intermediate routing node sending the data to the end point device; and
the end point device delivering the data received via the first radio circuitry to the second intermediate node via the second radio circuitry.

Advantageously, the first access network operates pursuant to a first protocol and the second access network operates pursuant to a second protocol that is communicatively incompatible with the first protocol.

Advantageously,
the first intermediate routing node is communicatively coupled to the end point device via a first access point; and
the first intermediate routing node sends the data destined for the second intermediate routing node to the first access point.

Advantageously, the first intermediate routing node is an access point.

Advantageously, both the first access network and the second access network are circuit switched networks.

Advantageously, both the first access network and the second access network are packet switched networks.

Advantageously, the first access network is a circuit switched network and the second access network is a packet switched network.

An intermediate routing node is provided in a communication infrastructure, the communication infrastructure further including an end point device and a secondary intermediate routing node, the secondary intermediate routing node is coupled to the end point device, the intermediate routing node comprising:
an upstream communication interface circuitry coupled to an upstream node;
a downstream communication interface circuitry coupled to the end point device; and
a processing circuitry that generates and delivers data destined for the secondary intermediate routing node to the end point device.

Advantageously, the intermediate routing node is communicatively coupled to the secondary intermediate routing node via the upstream communication interface circuitry.

Advantageously, the processing circuitry delivers the data destined for the secondary intermediate routing node to the end point device based on at least one communication characteristic.

Advantageously, the intermediate routing node operates pursuant to a first protocol and the secondary intermediate routing node operates pursuant to a second protocol that is communicatively incompatible with the first protocol.

An end point device is provided in a communication infrastructure having a first access point and a second access point, the end point device comprising:
radio circuitry;
processing circuitry, communicatively coupled with the radio circuitry, that directs association with both the first access point and the second access point via the radio circuitry;
the processing circuitry receives data generated by the first access point; and
the processing circuitry bridges the received data to the second access point via the radio circuitry, the received data for use by the second access point.

Advantageously, the first access point uses a first protocol that is incompatible with a second protocol that is used by the second access point.

Advantageously, the radio circuitry comprises a wireless transceiver that communicates with both the first access point and the second access point.

Advantageously, the processing circuitry bridging comprising adapting the received data into a format that is acceptable for transmission by the radio circuitry to the second access point.

Advantageously, the radio circuitry comprises a first wireless transceiver that communicates with the first access point and a second wireless transceiver that communicates with the second access point.

A method is provided performed by an end point device in a communication infrastructure, the end point device having first radio circuitry and second radio circuitry, the communication infrastructure also having a first data communication network and a second data communication network, the first data communication network having a first intermediate routing node; the second data communication network having a second intermediate routing node, the method comprising:
receiving data, generated by the first intermediate routing node for use by the second intermediate routing node, via the first radio circuitry;
bridging the received data from the first radio circuitry to the second radio circuitry; and
transmitting the received data toward the second intermediate routing node via the second radio circuitry.

Advantageously, the first intermediate routing node is an access point.

Advantageously, the second intermediate routing node is an access point.

Advantageously, the bridging comprising adapting the received data into a format that is acceptable for transmission by the second radio circuitry.

### BRIEF DESCRIPTION OF THE DRAWINGS

For various aspects of the present invention to be easily understood and readily practiced, various aspects will now be described, for purposes of illustration and not limitation, in conjunction with the following figures:

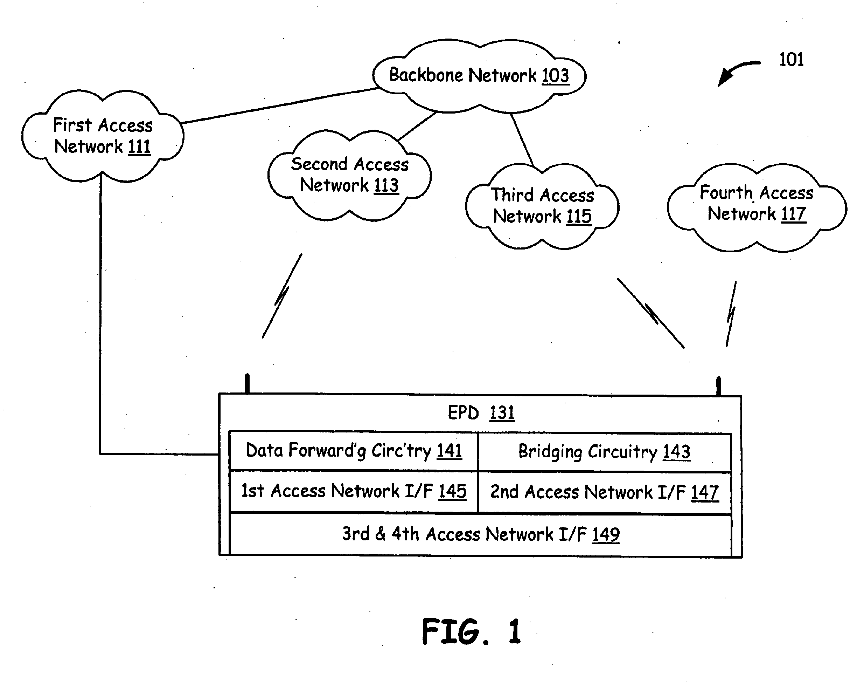

FIG. 1 is a schematic block diagram illustrating exchange of data between a plurality of access networks via an end point device, the plurality of access networks are communicatively coupled to the end point device in accordance with various aspects of the present invention;

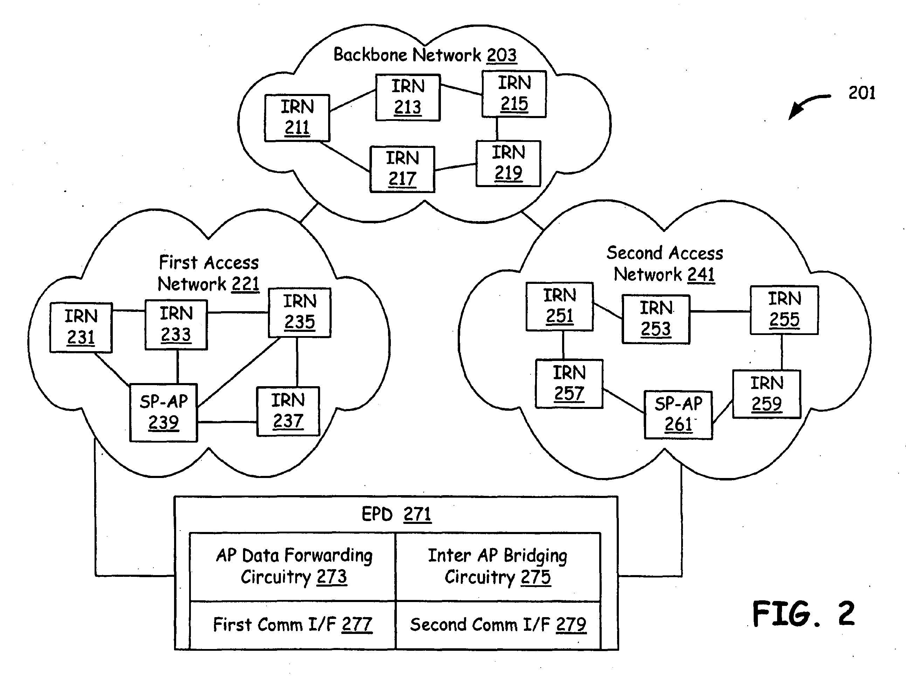

FIG. 2 is a schematic block diagram illustrating exchange of data between any two nodes from a first access network, a second access network and a backbone network via a downstream end point device, the first access network and the second access network being communicatively coupled to each other both via the backbone network and the downstream end point device;

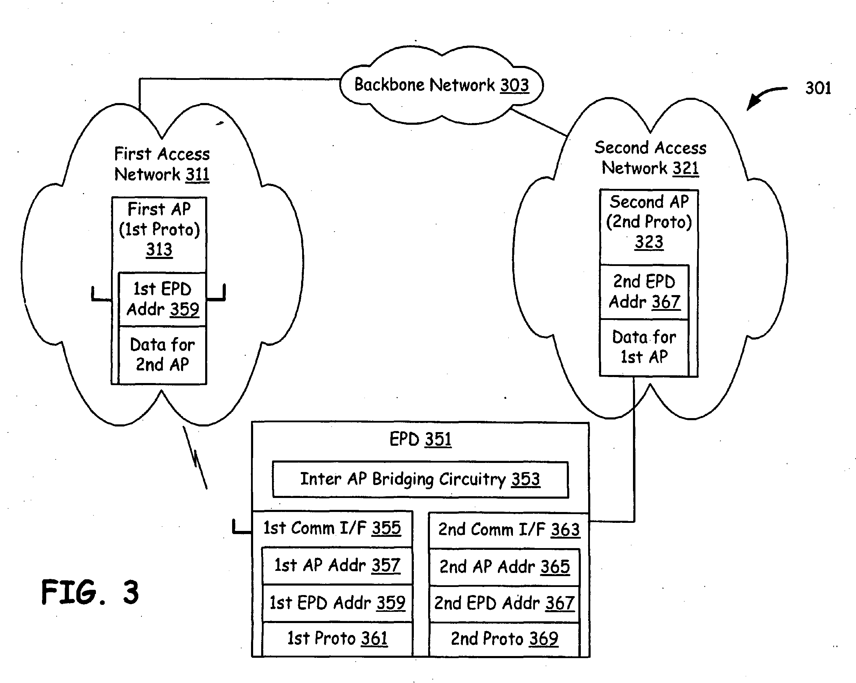

FIG. 3 is a schematic block diagram illustrating an end point device supporting exchange of data between a first access point and a second access point via the end point device, the first access point and the second access point being communicatively coupled to each other both via an upstream backbone network and the downstream end point device;

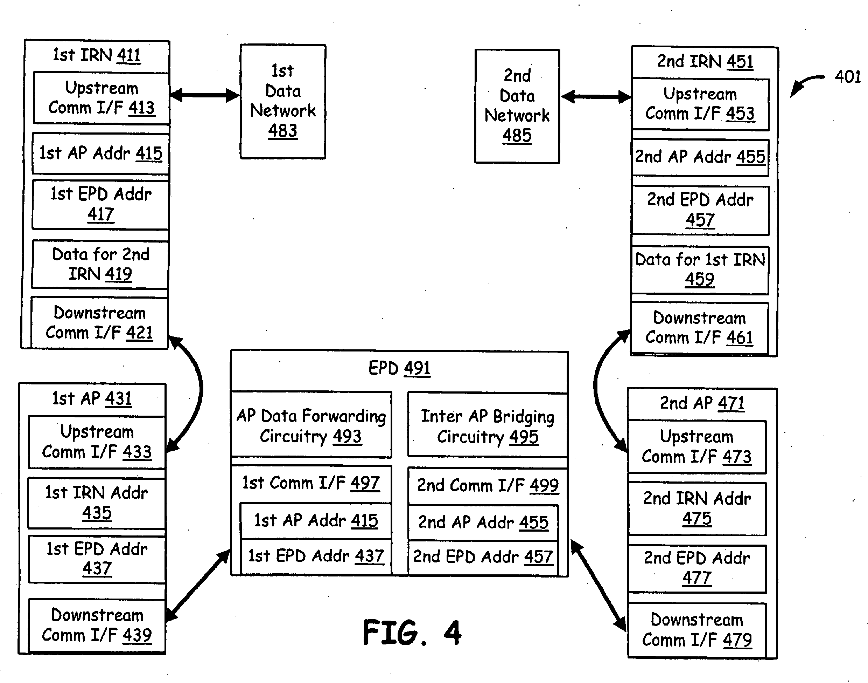

FIG. 4 is a schematic block diagram illustrating an end point device supporting exchange of data between a first intermediate routing node and a second intermediate routing node via the end point device, where the first intermediate routing node and the second intermediate routing node are communicatively coupled to the end point device via a first access point and a second access point respectively;

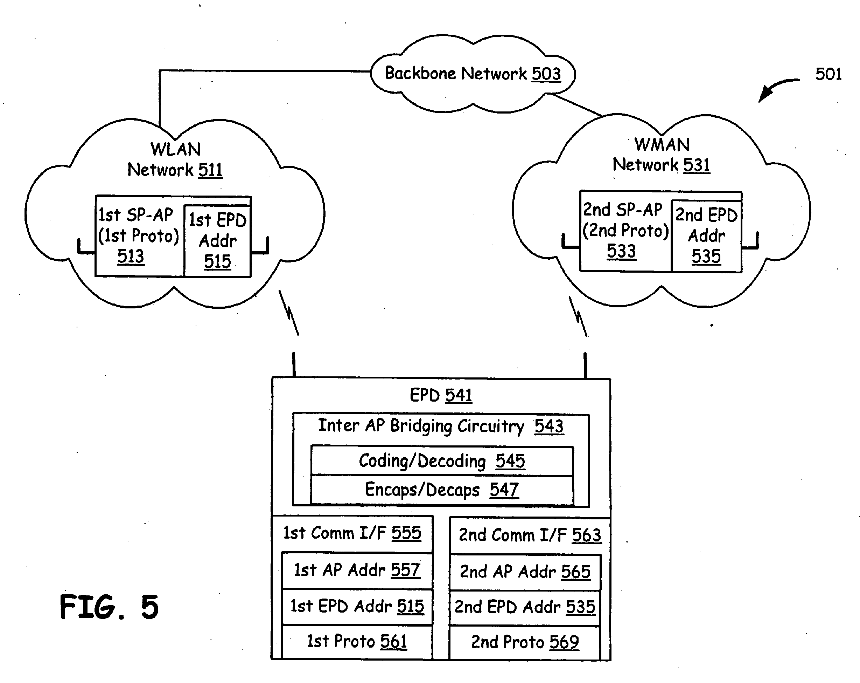

FIG. 5 is a schematic block diagram illustrating an end point device supporting exchange of data between a first access point and a second access point via the end point device, where the end point device interacts with the first access point and the second access point using two communicatively incompatible packet switched protocols;

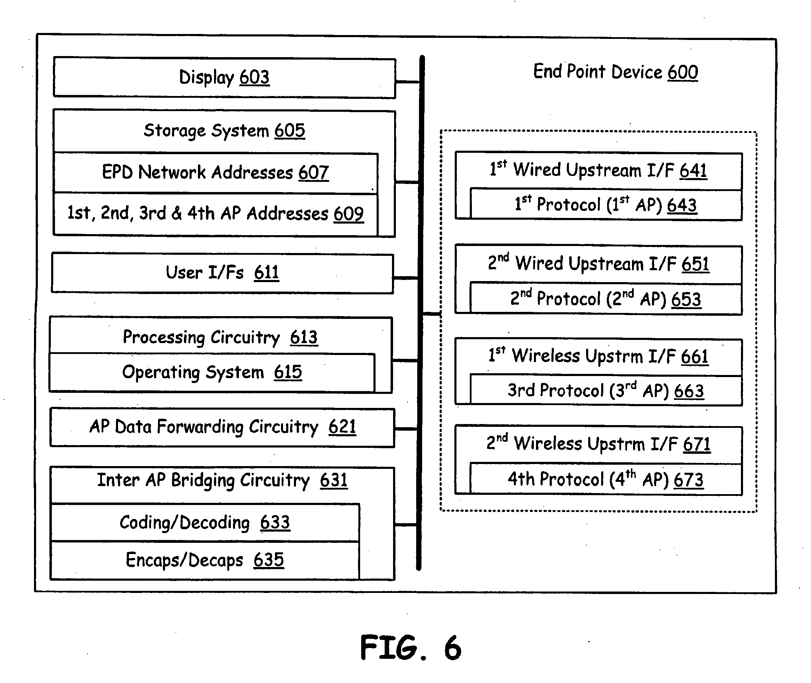

FIG. 6 is a schematic block diagram illustrating a plurality of components of an end point device that acts as a bridge between two upstream access points to support data flow between the two upstream access points;

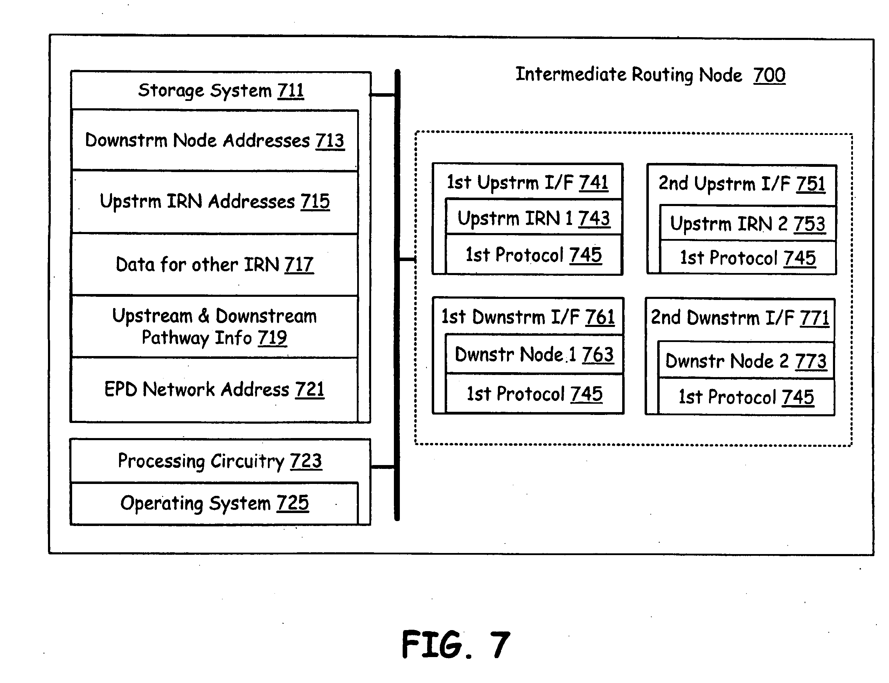

FIG. 7 is a schematic block diagram illustrating a plurality of components of an intermediate routing node that communicates with another intermediate routing node via an end point device; and

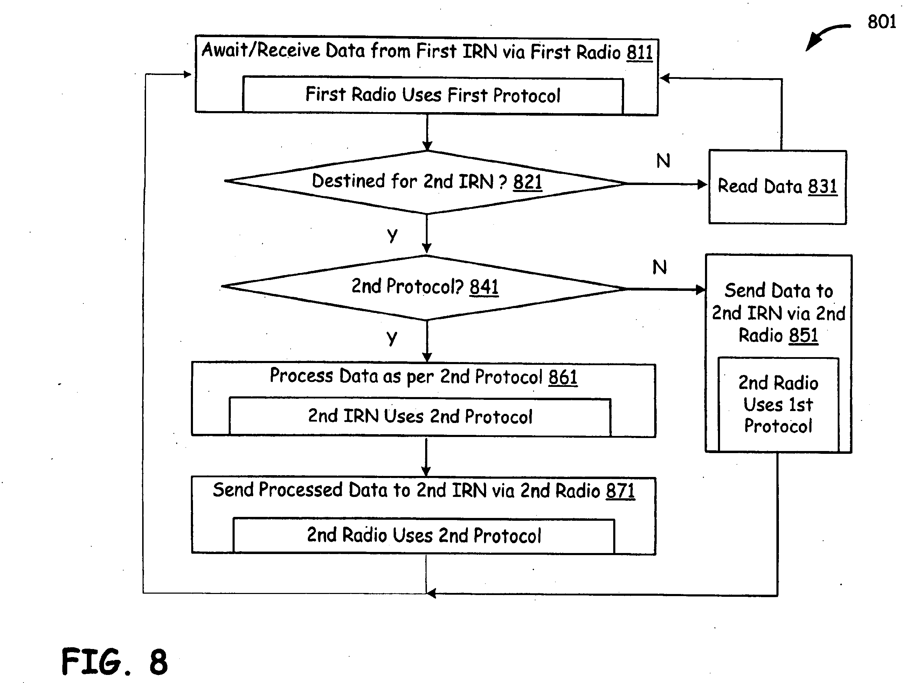

FIG. 8 is a flow chart illustrating a method of bridging a first intermediate routing node with a second intermediate routing node by an end point device.

### DETAILED DESCRIPTION

FIG. 1 is a schematic block diagram illustrating exchange of data between a plurality of access networks 111, 113, 115 and 117 via an end point device 131, the plurality of access networks 111, 113, 115 and 117 are communicatively coupled to the end point device 131. The EPD (end point device) 131 may be, for example and without limitation, a notebook, a personal computer, a phone, a server, a PDA (personal digital assistant) and a video game box. Each of the plurality of access networks 111, 113, 115 and 117 is a circuit switched data network or a packet switched data network. The plurality of access networks 111, 113, 115 and 117 may operate pursuant to same protocol. In another embodiment, of the present invention, each of the plurality of access networks 111, 113, 115 and 117 operates pursuant to different and communicatively incompatible protocols. A single service provider or multiple service providers may manage the plurality of access networks 111, 113, 115 and 117. Typical examples of the plurality of access networks 111, 113, 115 and 117 are WiMax networks or other WANs (Wireless Area Networks), WLANs, satellite networks, cable networks, fiber optic networks, GSM networks, GPRS networks, CDMA networks, EDGE networks, WCDMA networks, etc. In this exemplary case, a first access network 111 is communicatively coupled to a backbone network 103 via an inoperative communication link as shown in FIG. 1. A second access network 113 and a third access network 115 are communicatively coupled to the backbone network 103 via respective operative communication links. A fourth access network 117 is not communicatively connected to the backbone network 103.

The EPD 131 is communicatively coupled to each of the plurality of access networks 111, 113, 115 and 117 via communication links. The communication links between the EPD 131 and any of the plurality access networks 111, 113, 115 and 117 are wired links, wireless links or a combination of wired links and wireless links. The EPD 131 comprises a first access network I/F (interface) 145, a second access network I/F 147, and a third and fourth access network I/F 149. These interfaces 145, 147 and 149 are one or more of hardware and software. The EPD 131 communicates with the first access network 111, the second access network 113, the third access network 115 and the fourth access network 117 via the first access network I/F 145, the second access network I/F 147, and the third and fourth access network I/F 149, respectively. The EPD 131 in addition comprises data forwarding circuitry 141 and bridging circuitry 143. One or both the data forwarding circuitry 141 and the bridging circuitry 143 may be disabled selectively.

Each of the plurality of access networks 111, 113, 115 and 117 comprises a plurality of intermediate routing nodes. An intermediate routing node may typically be a client AP (access point), SP (service provider) AP, router, switch, hub, etc. As a way of example and without limitation, a first IRN (intermediate routing node) that belongs to the first access network 111 generates data to be sent to a second IRN that belongs to the second access network 113. The data may be, a command for the second IRN, control information, pathway information (such as delay, traffic congestion, supported bit rate, interference, protocol parameter settings, etc.), a handoff request to the second IRN, a traffic sharing request, etc. Instead of communicating the generated data via the backbone network 103, the first IRN communicates the generated data via the EPD 131.

For example, the first IRN cannot communicate with the second IRN via the backbone network 103 as communication link between the first access network 111 and the backbone network 103 is inoperative. The first IRN sends the data destined for the second IRN to the EPD 131. The first IRN may not be directly connected to the EPD 131. For example, the first IRN is connected to the EPD 131 via a first AP. In such case, the first IRN sends the data encapsulated with an EPD network address and a second IRN identifier to the first AP. The first AP subsequently forwards the received data to the EPD 131. The EPD 131 receives the data via the first access network I/F 145. The EPD 131 determines that the data is destined for the second IRN by using the second IRN identifier.

In one embodiment, the EPD 131 communicates with the first access network 111 and the second access network 113 using same data communication protocol. In such case, the data forwarding circuitry 141 of the EPD 131 forwards the received data to the second access network 113 via the second access network I/F 147. The second IRN may be indirectly connected to the EPD 131 via a second AP. In such case, the EPD 147 forwards the received data to the second AP and the second AP subsequently sends the data to the second IRN. The data that originated at the first IRN in the first access network 111 thus reaches the second IRN in the second access network 113 via the EPD 131.

In another embodiment, the EPD 131 communicates with the first access network 111 using a first protocol and communicates with the second access network 113 using a second protocol that is communicatively incompatible with the first protocol. For example, the first access network 111 is a WLAN network and the first protocol is IEEE 802.11 protocol and the second access network 113 is a WAN (Wireless Area Network), using an IEEE 802.16 protocol. In such case, the bridging circuitry 143 of the EPD 131 processes the received data to generate a processed data that conforms to the second protocol. The processing may typically involve decoding/coding, un-formatting/formatting operations. The EPD 131 sends the processed data to the second IRN via the second access network I/F 147. The data that originated at the first IRN in the first access network 111 thus reaches the second IRN in the second access network 113 via the EPD 131.

The second IRN in the second access network 113 generates a second data for a third IRN in the third access network 115. The second access network 113 and the third access network 115 are communicatively coupled to each other via the backbone network 103. The second IRN does not know network address of the third IRN. The second IRN sends the second data destined for the third IRN to the EPD 131. The EPD 131 receives the second data from the second IRN via the second access network I/F 147 and sends the received data, with or without processing depending on type of protocols of the second access network 113 and of the third access network 115 use, to the third IRN via the third and fourth access network I/F 149. The EPD 131 has network address of the third IRN stored in its memory. The EPD 131 encapsulates the second data received via the second access network I/F 147 with the network address of the third IRN and sends resulting encapsulated data to the third IRN via the third and fourth access network I/F 149. The third IRN may be coupled to the EPD 131 via a third AP. In such case, the EPD 131 has network address of the third AP stored in its memory. The EPD 131 encapsulates the second data with the network address of the third AP before sending it out via the third and fourth access network I/F 149. The third AP forwards the encapsulated second data to the third IRN.

FIG. 2 is a schematic block diagram illustrating exchange of data between any two nodes from a first access network 221, a second access network 241 and a backbone network 203 via a downstream end point device 271, the first access network 221 and the second access network 241 being communicatively coupled to each other both via the backbone network 203 and the downstream end point device 271. The first access network 221 comprises a first plurality of intermediate routing nodes (IRN) 231, 233, 235, 237 and 239. The first plurality of IRNs 231, 233, 235, 237 and 239 are directly and/or indirectly communicatively coupled to each other. The first plurality of IRNs 231, 233, 235, 237 and 239 may be a first SP-AP (service provider access point) such as 239, a router, a switch etc. The second access network 241 comprises a second plurality of IRNs 251, 253, 255, 257, 259 and 261. The second plurality of IRNs 251, 253, 255, 257, 259 and 261 are directly and/or indirectly communicatively coupled to each other. The IRN 261 is a second SP-AP. The backbone network 203 comprises a third plurality of IRNs 211, 213, 215, 217 and 219. The third plurality of IRNs 211, 213, 215, 217 and 219 are directly and/or indirectly communicatively coupled to each other. The EPD (end point device) 271 is communicatively coupled to the first SP-AP 239 via a first communication interface (I/F) 277 and is communicatively coupled to the second SP-AP 261 via a second communication interface 279. The EPD 271 is thus adapted to communicate with any of the first plurality of IRNs via the first communication I/F 277 and the first SP-AP 239 and also with any of the second plurality of IRNs via the second communication I/F 279 and the second SP-AP 261.

The EPD 271 receives a first network address from the first SP-AP 239 when it associates itself with the first SP-AP 239 (i.e., the first access network 221). The first network address of the EPD 271 is relayed to all of the first plurality of IRNs. The EPD 271 and/or the first SP-AP 239 may choose to deliver the first network address of the EPD 271 to all or at least few of the third plurality of IRNs. The EPD 271 similarly receives a second network address from the second SP-AP 261 when it associates itself with the second SP-AP 261 (i.e., the second access network 241). The second network address of the EPD 271 is relayed to all of the second plurality of IRNs and selectively to all or at least few of the third plurality of IRNs. The first plurality of IRNs and the second plurality of IRNs are capable of sending data to the EPD 271. None of the first plurality of IRNs knows network addresses of any of the second plurality of IRNs and vice versa. The EPD 271 has a first SP-AP network address corresponding to the first SP-AP 239 and a second SP-AP network address corresponding to the second SP-AP 261 stored in its memory. The EPD 271 uses the first SP-AP network address and the second SP-AP network address to send data to the first SP-AP 239 and the second SP-AP 261 respectively.

As a way of example and without limitation a first IRN 233 from the first plurality of IRNs generates a data for a second IRN 253 from the second plurality of IRNs. The data may typically be a request, a command, control information, a pathway information etc. Two different service providers may service the first access network 221 and the second access network 241. Both the first access network 221 and the second access network 241, for example, use same protocol for data communication. The first IRN 233 being unaware of network address of the second IRN 253, delivers the data destined for the second IRN 253 to the EPD 271 after encapsulating the data with the first network address of the EPD 271. The data reaches the first communication I/F 277 of the EPD 271 after being relayed via the first SP-AP 239. The EPD 271 encapsulates the data that it receives via the first communication I/F 277 with the second SP-AP network address and forwards the encapsulated data to the second SP-AP 261 via the second communication I/F 279. The second SP-AP 261 forwards the data to the second IRN 253. The data generated by the first IRN 233 thus reaches destination IRN i.e., the second IRN 253 via the EPD 271.

In another embodiment, the first access network 221 uses a first protocol for data communication and the second access network 241 uses a second protocol that is communicatively incompatible with the first protocol for data communication. The first IRN 233 delivers the data destined for the second IRN 253 to the EPD 271 after encapsulating the data with the first network address of the EPD 271. The EPD 271 receives the data via the first SP-AP 239 and the first communication I/F 277. Inter AP bridging circuitry 275 of the EPD 271 processes the received data so as to conform to the second protocol. Processing may typically involve decoding, encoding, formatting etc. The EPD 271 sends processed data that conforms to the second protocol to the second SP-AP 261 via the second communication I/F 279. The second SP-AP 261 forwards the processed data to the second IRN 253. As an example the first protocol is a fiber optic data communication protocol and the second protocol is a wireless LAN protocol, such as IEEE 802.11.

A third IRN 211 that is one of the third plurality of IRNs generates a second data for the second IRN 253. The third IRN 211 being unaware of the network address of the second IRN 253, encapsulated the second data with the first network address of the EPD 271 and sends the encapsulated second data to the first access network 221. For example and without limitation, a fourth IRN 235 from the first plurality of IRNs functions as a gateway for the first access network 221. The fourth IRN 235 receives the encapsulated second data from the third IRN 211. The fourth IRN 235 delivers the encapsulated second data to the first SP-AP 239 that forwards the second data to the EPD 271. The EPD 271 sends the second data via the second communication I/F 279 to the second SP-AP 261 with or without passing the second data through the inter AP bridging circuitry 275 based on type of protocols the first access network 221 and the second access network 241 use. The second SP-AP 261 forwards the second data to destination IRN i.e., the second IRN 253.

FIG. 3 is a schematic block diagram illustrating an end point device (EPD) 351 supporting exchange of data between a first access point 313 and a second access point 323 via the end point device 351, the first access point 313 and the second access point 323 being communicatively coupled to each other both via an upstream backbone network 303 and the downstream end point device 351. The EPD 351 is communicatively coupled to the upstream first AP (access point) 313 via a first communication interface (I/F) 355 and also communicatively coupled to the upstream second AP 323 via a second communication I/F 363. The first AP 313 is communicatively coupled to the downstream EPD 351 and to an upstream first node (not shown here) that belongs to the first access network 311. The first access network 311 is communicatively coupled to the upstream backbone network 303, implying that the first AP 313 is capable of interacting with the upstream backbone network 303. Similarly the second AP 323 interacts with the downstream EPD 351 and the upstream backbone network 303 via an upstream second node (not shown here). The first AP 313 conducts upstream and downstream data communication using a first protocol 361. The second AP 323 conducts upstream and downstream data communication using a second protocol 369 that is communicatively incompatible with the first protocol 361. Typical example is the first protocol 361 being IEEE 802.16 protocol and the second protocol 369 being a cable data communication protocol.

The EPD 351, while associating itself with the first AP 313 for the first time, receives a first AP address 357 and a first EPD address 359 from the first AP 313. The first AP address 357 uniquely identifies the first AP 313. The first AP 313 uses the first EPD address 359 to send data to the EPD 351. Association of the EPD 351 with the second AP 323 results in the EPD 351 receiving a second AP address 365 and a second EPD address 367 from the second AP 323. The EPD 351 comprises an inter AP bridging circuitry 353. Two different service providers maintain the first access network 311 and the second access network 321. The first AP 313 does not know the second AP address 365 and the second AP 323 does not know the first AP address 357. The EPD 351 interacts with the first AP 313 via a wireless link and with the second AP 323 via a wired link. The first AP 313 desires to send data to the second AP 323. The data may typically comprise a handover request to the second AP 323, a traffic sharing request to the second AP 323, a pathway information corresponding to communication path between the backbone network 303 and the first AP 313, an enquiry regarding delay and/or traffic congestion in the second access network 321 etc. The first AP 313 being unaware of the second AP address 365 sends the data to the EPD 351. The EPD 351 receives the data via the first communication I/F 355. The inter AP bridging circuitry 353 of the EPD 351 applies formatting and/or coding to the data to generate a processed data. The processed data conforms to the second protocol 369. The EPD 351 sends the processed data to the second AP 323 via the second communication I/F 363 and using the second AP address 365. When the second AP 323 wants to send a second data to the first AP 313, it sends the second data to the EPD 351 using the second protocol 369 and the second EPD address 367. The EPD 351 receives the second data via the second communication I/F 363. The inter AP bridging circuitry 353 of the EPD 351 applies formatting and/or coding to the second data to generate a second processed data that conforms to the first protocol 361. The EPD 351 sends the second processed data to first AP 313 via the first communication I/F 355 and using the first AP address 357. The first AP 313 and the second AP 323 in spite of being communicatively coupled to each other via the upstream backbone network 303, exchange data between them via the downstream EPD 351 as the first AP 313 and the second AP 323 do not know each other's network addresses. In another embodiment, the first AP 313 and the second AP 323 are supplied with each other's network address but the first AP 313 and the second AP 323 are not communicatively coupled to each other via the upstream backbone network 303. In the another embodiment, the first AP 313 and the second AP 323 exchange data between them via the downstream EPD 251. The EPD 351 performs bridging between the first AP 313 and the second AP 323 by applying appropriate processing to data that originated at one of two APs (the first AP 313 and the second AP 323) and destined for other of the two APs while the data passes through the EPD 351.

FIG. 4 is a schematic block diagram illustrating an end point device 491 supporting exchange of data between a first intermediate routing node 411 and a second intermediate routing node 451 via the end point device 491, where the first intermediate routing node 411 and the second intermediate routing node 451 are communicatively coupled to the end point device 491 via a first access point 431 and a second access point 471 respectively. The first intermediate routing node (IRN) 411 interacts with a first data network 483 via its upstream communication interface (I/F) 413 and in addition interacts with the first AP (access point) 431 via its downstream communication I/F 421. The first IRN 411 uses a first AP address 415 to communicate with the first AP 431. The first AP 431 interacts with the first IRN via its upstream communication I/F 433 and in addition communicates with the EPD (end point device) 491 via its downstream communication I/F 439. The first AP 431 communicates with the first IRN 411 using a first IRN address 435. The first AP 431 uses a first EPD address 437 to interact with the EPD 491. The first IRN 411 has the first EPD address 437 stored in its memory, so that the first IRN 411 encapsulates data that it wants to send to the EPD 491 with the first EPD address 437 before sending the data to the first AP 431.

The second IRN 451 interacts with a second data network 485 via its upstream communication I/F 453 and in addition interacts with the second AP 471 via its downstream communication I/F 461. The second IRN 451 uses a second AP address 455 to communicate with the second AP 471. The second AP 471 communicates with the second IRN 451 via its upstream communication I/F 473 and communicates with the EPD 491 via its downstream communication I/F 479. The second AP 471 communicates with the second IRN 451 using a second IRN address 475 that uniquely identifies the second IRN 451. The second AP 471 uses a second EPD address 477 to interact with the EPD 491. The second IRN 451 has the second EPD address 477 stored in its memory, so that the second IRN 451 encapsulates data that it wants to send to the EPD 491 with the second EPD address 477 before sending the data to the second AP 471. The first AP 431 and the first IRN 411 are part of the first data network 483. The second AP 471 and the second IRN 451 are part of the second data network 485. The first AP 431 and the first IRN 411 operate pursuant to a first protocol. The second AP 471 and the second IRN 451 operate pursuant to a second protocol. The first protocol and the second protocol may or may not be communicatively compatible with each other.

The first IRN 411 generates a data for the second IRN 451. The first IRN 411 has no pathway to the second IRN via its upstream communication I/F 413. Even if such a pathway exists the first IRN 411 does not know the second IRN address 475. The first IRN 411 appends the data with the first AP address 415 and a second IRN identifier to indicate that destination of the data is the second IRN 451. The first IRN 411 sends appended data to the first AP 431 via its downstream communication I/F 421. The first AP 431 forwards the data to the EPD 491 using the first EPD address 437. The EPD 491 receives the data from the first AP via the first communication I/F 497. The EPD 491 from the second IRN identifier identifies that destination of the data is the second IRN 451. If the first AP 431 and the second AP 471 use identical data communication protocol then the data does not need any formatting and/or encoding. Data forwarding circuitry 493 of the EPD 491 appends the data with the second AP address 455. If the first AP 431 and the second AP 471 use different data communication protocols then the data need formatting and/or encoding to conform to a protocol that the second AP 471 uses. In such case, inter AP bridging circuitry 495 of the EPD 491 applies formatting and/or encoding to conform to the protocol that the second AP 471 uses. The inter AP bridging circuitry 495 in addition appends the formatted data with the second AP address 455. The second communication I/F 499 of the EPD 491 sends the data taken from the data forwarding circuitry 493 or the inter AP bridging circuitry 495 to the second AP 471. The second AP 471 in turn forwards the data to the second IRN 451 via its upstream communication I/F 473 and using the second IRN address 475. The EPD 491 performs necessary formatting and/or encoding to the data that flows through the EPD 491 on its journey from origin i.e., the first IRN 411 to destination i.e., the second IRN 451. The first IRN 411 and the second IRN 451 are one or more of a router, an access point, a switch etc. The first IRN 411 may be a service provider access point and the first AP 431 may be a client access point. The EPD 491 may be personal computer, a PDA, a notebook, a phone, a video game box etc. Data communication protocol(s) used by the first AP 431 and the second AP 471 may be one or combination of a circuit switched protocol and a packet switched protocol.

The second IRN 451 generates a second data for the first IRN 411. The second IRN 451 being unaware of the first IRN address 435, sends the second data to the second AP 471. The second data finds its way to the first IRN 411 after traveling via the second AP 471, the EPD 491, and the first AP 431. The first AP 431 encapsulates the second data with the first IRN address 435 and sends the encapsulated second data to the first IRN 411. The EPD 491 provides necessary processing, if any, to the second data.

FIG. 5 is a schematic block diagram illustrating an end point device 541 supporting exchange of data between a first access point 513 and a second access point 533 via the end point device 541, where the end point device interacts with the first access point 513 and the second access point 533 using two communicatively incompatible packet switched protocols, 561 and 569. The first access point 513 is a service provider-access point (SP-AP) that is part of a WLAN network 511. The first SP-AP 513 uses a first protocol 561, which may typically be IEEE 802.11 protocol for packet switched data communication with the EPD 541 and any of other nodes (not shown here) from the WLAN network 511. The first SP-AP 513 is associated with the EPD 541 via a first communication I/F 555. The first communication I/F 555 thus operates pursuant to the first protocol 561. The second access point 533 is a service provider-access point (SP-AP) that is part of a WAN network 531. The second SP-AP 533 uses a second protocol 569, which may typically be IEEE 802.16 protocol for packet switched data communication with the EPD 541 and any of other nodes (not shown here) from the WAN network 531. The second SP-AP 533 is associated with the EPD 541 via a second communication I/F 563. The second communication I/F 563 thus operates pursuant to the second protocol 569. The WLAN network 511 and the WAN network 531 i.e., the first SP-AP 513 and the second SP-AP 533 are communicatively coupled to each other via an upstream backbone network 503. The first SP-AP 513 does not know a second AP address 565 that uniquely identifies the second SP-AP 533. The second SP-AP 533 does not know a first AP address 557 that uniquely identifies the first SP-AP 513.

The EPD 541 comprises an inter AP bridging circuitry 543. The second SP-AP 533 desires to send a packet data to the first SP-AP 513. The packet data may typically comprise a handover request to the first SP-AP 513, current performance information corresponding to the WAN network 531, a traffic load distribution request, an enquiry regarding current performance of the WLAN network 511, a control command etc. The second SP-AP 533 is indirectly connected to the first SP-AP 513 via the upstream backbone network 503. The second SP-AP 533 is not able to send the packet data to the first SP-AP 513 via the upstream backbone network 503 as the second SP-AP 533 does not know the first AP address 557. The second SP-AP 533 sends the packet data to the EPD 541 using a first EPD address 535 and a first SP-AP identifier. The packet data is encoded by the second SP-AP 533 prior to transmission in accordance with the second packet switched data protocol 569. The EPD 541 receives the packet data via the second communication I/F 563. The inter AP bridging circuitry 543 de-capsulates the packet data and identifies that the packet data is destined for the first SP-AP 513 using the first SP-AP identifier. The inter AP bridging circuitry 543 applies formatting and/or coding to the packet data in accordance with the first packet switched data protocol 561. The first communication I/F 555 sends the formatted packet data to the first SP-AP 513 using the first AP address 557. The packet data thus reaches the first SP-AP 513.

The first SP-AP 513 similarly sends a second packet data to the second SP-AP 533 via the EPD 541. The EPD 541 acts as a bridge between the first SP-AP 513 and the second SP-AP 533. Since the first SP-AP 513 and the second SP-AP 533 use two communicatively incompatible packet switched data protocols, the EPD 541 applies de-capsulation/encapsulation, decoding/encoding and/or decryption/encryption on the packet data that it receives via one of the first communication I/F 555 and the second communication I/F 563 prior to sending the packet data out via other of the first communication I/F 555 and the second communication I/F 563.

FIG. 6 is a schematic block diagram illustrating a plurality of components of an end point device 600 that acts as a bridge between two upstream access points to support data flow between the two upstream access points. The EPD (end point device) 600 comprises a first wired upstream I/F 641 via which the EPD 600 is communicatively coupled to a first AP. The EPD 600 uses a first protocol 643 to interact with the first AP. The EPD 600 comprises a second wired upstream I/F 651 via which the EPD 600 is communicatively coupled to a second AP. The EPD 600 uses a second protocol 653 to interact with the second AP. The EPD 600 communicates with a third AP and a fourth AP via a first wireless upstream I/F 661 and a second wireless upstream I/F 671 respectively. The EPD 600 uses a third protocol 663 and a fourth protocol 673 to interact with the third AP and the fourth AP respectively. The first protocol 643, the second protocol 653, the third protocol 663 and the fourth protocol 673 may be one or more of a circuit switched data protocol and a packet switched data protocol. The first AP, the second AP, the third AP and the fourth AP do not have network addresses of each other. The first AP, the second AP, the third AP and the fourth AP may be serviced by same or different service providers.

The EPD 600 may typically be a server, a video game box, a personal computer, a notebook, a PDA, a phone etc. The EPD 600 comprises a display 603 and a user interface (I/F) 611. The user I/F 611 is, for example and without limitation, a mouse, a keyboard, a touchpad, a pen based interface, a voice based interface, a touch screen etc. The EPD 600 comprises a storage system 605 that stores AP addresses 609 and EPD network addresses 607. Each of the first AP, the second AP, the third AP and the fourth AP is uniquely identified by a network address and the AP addresses 609 refer to four unique network addresses corresponding to four APs. The EPD 600 being associated with the four APs is capable of sending and receiving data from the four APs. Each of the four APs assign a unique network address to the EPD 600 and the EPD 600 is identified by the four APs using the EPD network addresses 607.

The EPD 600 comprises an AP data forwarding circuitry 621. The EPD 600 in addition comprises an inter AP bridging circuitry 631 that consists of sub-modules, for example, a coding/decoding module 633, an encapsulation/de-capsulation module 635 etc. One or more sub-modules of the inter AP bridging circuitry 631 can be selectively disabled. The EPD 600 comprises a processing circuitry 613 that runs an operating system 615.

The EPD 600 in this example is associated with four APs. The EPD 600 in other embodiment may be associated with any two or more APs simultaneously. The EPD 600 receives a data from the first AP via the first wired upstream I/F 641. The processing circuitry 613 of the EPD 600 determines that the received data is destined for the fourth AP. The EPD 600 is associated with the first AP using the first protocol 643 and the associated with the fourth AP using the fourth protocol 673 that is communicatively incompatible with the first protocol 643. The processing circuitry 613 sends the received data to the inter AP bridging circuitry 631. One or more of the sub-modules of the inter AP bridging circuitry 631 removes coding and/or encapsulation pursuant to the first protocol 643 and applies formatting, coding and/or encapsulation pursuant to the fourth protocol 673. Next the inter AP bridging circuitry 631 sends the data to the second wireless upstream I/F 671. The second wireless upstream I/F 671 sends the data that conforms to the fourth protocol 673 to the fourth AP using unique network address of the fourth AP. The data received by the EPD 600 from the first AP may have originated in the first AP or in a node to which the first AP is communicatively connected. The fourth AP may not be ultimate destination of the data received by the EPD 600. The EPD 600 acts as a communication bridge between the first AP and the fourth AP because the first AP and the fourth AP do not know each other's network addresses.

In another embodiment, the first AP and the fourth AP know each other's network addresses. Such a situation typically arises when same service provider services the first AP and the fourth AP. However if communication link between the first AP and the fourth AP goes to non-operative state then of the first AP and the fourth AP choose to exchange data via the EPD 600. If the first AP and the fourth AP use same protocol for data communication then the AP data forwarding circuitry 621 directs communication I/F to which the fourth AP is communicatively coupled to transmit the received data to the fourth AP. Formatting, encoding, etc., are not applied to the received data by the EPD 600.

FIG. 7 is a schematic block diagram illustrating a plurality of components of an intermediate routing node 700 that communicates with another intermediate routing node via an end point device. The IRN (intermediate routing node) 700 is, for example and without limitation, a service provider access point, a client access point, a router etc. The IRN 700 is part of an access network and/or part of a backbone network that communicatively couples two or more access networks. The IRN 700 has two upstream interfaces 741 and 751 and two downstream communication interfaces 761 and 771. The IRN 700 is associated with a first upstream IRN 743 via a first upstream I/F (interface) 741. The IRN 700 is in addition associated with a second upstream IRN 751, a first downstream node 763 and a second downstream node 773 via a second upstream I/F 751, a first downstream I/F 761 and a second downstream I/F 771 respectively. The first downstream node 763 and the second downstream node 773 are typically an end point device, an access point, a router etc. The EPD (end point device) is a phone, a notebook, a personal computer, a PDA, a server, a video game box etc. As a way of example and without limitation, the IRN 700 is a service provider access point, the first downstream node 763 is a client access point and the second downstream node 773 is a notebook. The first upstream IRN 743 is a router and the second upstream IRN 753 is a switch.

The IRN 700 being communicatively associated with upstream IRNs 743, 753 and downstream nodes 763, 773 has network addresses of the upstream IRNs, 715 and network addresses of the downstream nodes, 713 stored in a storage system 711 of the IRN 700. The IRN 700 uses a first protocol to communicate with the upstream IRNs 743, 753 and the downstream nodes 763, 773. The IRN 700 generates data for a secondary IRN (not shown). The IRN 700 does not know network address of the secondary IRN. The IRN 700 has an EPD address 721 stored in the storage system 711. The IRN 700 is aware of the fact that the EPD has the network address of the secondary IRN.

Processing circuitry 723 of the IRN 700 being unaware of the network address of the secondary IRN (not shown here) sends the data to the EPD via one of the two downstream interfaces 761, 771 using the EPD address 721. The EPD receives the data directly or indirectly from the IRN 700. If the EPD is the first downstream node 673 or the second downstream node 773, then the EPD receives the data directly from the IRN 700. Alternately the EPD is communicatively connected to one or more of the two downstream nodes 763, 773 and the EPD receives the data indirectly from the IRN 700. The EPD processes the data received from the IRN 700, if necessary, and sends the data to the secondary IRN (not shown) using the network address of the secondary IRN. The EPD processes the data before sending the data to the secondary IRN if the IRN 700 and the secondary IRN operate pursuant to communicatively incompatible protocols. The EPD forwards the data to the secondary IRN without processing if the IRN 700 and the secondary IRN use same protocol for data communication.

The IRN 700 may act as a destination of data generated by the secondary node (not shown). The IRN 700 receives a second data from the upstream IRN 743. The processing circuitry 723 of the IRN 700 determines destination address of the second data. If the second data is destined for the downstream node 673, then the IRN 700 forwards the second data to the first downstream node 763 via the first downstream I/F 761. The IRN 700 in this case acts as an intermediate router between origin of the second data and destination of the second data.

The IRN 700 in one embodiment is communicatively coupled to the secondary IRN via an upstream backbone network. The IRN 700 being unaware of the network address of the secondary IRN sends the data destined for the secondary IRN via one of the two downstream communication interfaces 761 and 771 using the EPD address 721.

FIG. 8 is a flow chart illustrating a method of bridging a first intermediate routing node with a second intermediate routing node by an end point device. The method starts at block 811. Typical examples of the EPD (end point device) are a PC, a notebook, a PDA, a video game box, a phone, a server etc. The EPD comprises a first radio circuitry and a second radio circuitry. The EPD is associated with a first access point (AP) via the first radio circuitry and is in addition associated with a second access point (AP) via the second radio circuitry. Each of the first IRN (intermediate routing node) and the second IRN may be, for example and without limitation, a router, a service provider AP, a client AP, a switch etc. An EPD is typically directly coupled to an access point. If an IRN is an AP then the IRN is directly coupled to the EPD. If the IRN is not an AP the IRN is indirectly coupled to the EPD via an AP.

In the block 811, the EPD receives data from the first IRN via the first radio circuitry and the first AP. The data originates in the first IRN and the first IRN sends the data to the first AP. The first AP forwards the data to the EPD in step 811 via the first radio circuitry. The EPD and the first AP interact with each other using a first protocol. The first radio circuitry is adapted to handle data communication using the first protocol. If the first IRN is the first AP then the first AP is the origin of the data. In a next step 821, the EPD determines destination address of the data. If the data is destined for the EPD, then the EPD reads the data as shown in a block 831. The EPD waits for next data from the first IRN. If the data is destined for the second IRN then the EPD determines protocol that the second AP uses for data communication in step 841. The EPD prepares to send the data to the second IRN via the second AP.

If the second AP uses the first protocol for data communication, then the EPD appends network address of the second AP to the data received via the first radio circuitry. Next the EPD sends the data to the second AP via the second radio circuitry as shown in a block 851. The second AP forwards the data to the second IRN. The EPD awaits the next data from the first IRN. The second radio circuitry in this case handles data communication using the first protocol. If the second AP uses a second protocol for data communication, then the EPD processes the data so as to conform to the second protocol as shown in a block 861. Processing typically involves encoding and/or decoding, encapsulation and/or de-capsulation etc. In a next step 871, the EPD sends the processed data to the second AP via the second radio circuitry. The second AP in turn sends the processed data to the second IRN. The second radio circuitry in this case operates pursuant to the second protocol. The EPD awaits the next data from the first IRN. The EPD thus provides necessary processing to the data on its way from source, i.e., the first IRN to destination, i.e., the second IRN.

The first protocol and the second protocol is one or combination of a packet switched data protocol and a circuit switched data protocol. The first IRN and the second IRN belong to same or different access network. The first IRN and the second IRN may be communicatively connected to each other via an alternate path. The first IRN and the second IRN do not know each other's network address and hence exchange data between them via the EPD. The EPD similarly provides necessary processing to a second data on its way from the second IRN to the first IRN.

As one of average skill in the art will appreciate, the term "communicatively coupled", as may be used herein, includes wireless and wired, direct coupling and indirect coupling via another component, element, circuit, or module. As one of average skill in the art will also appreciate, inferred coupling (i.e., where one element is coupled to another element by inference) includes wireless and wired, direct and indirect coupling between two elements in the same manner as "communicatively coupled".

The present invention has also been described above with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope of the claimed invention.

The present invention has been described above with the aid of functional building blocks illustrating the performance of certain significant functions. The boundaries of these functional building blocks have been arbitrarily defined for convenience of description. Alternate boundaries could be defined as long as the certain significant functions are appropriately performed. Similarly, flow diagram blocks may also have been arbitrarily defined herein to illustrate certain significant functionality. To the extent used, the flow diagram block boundaries and sequence could have been defined otherwise and still perform the certain significant functionality. Such alternate definitions of both functional building blocks and flow diagram blocks and sequences are thus within the scope of the claimed invention.

One of average skill in the art will also recognize that the functional building blocks, and other illustrative blocks, modules and components herein, can be implemented as illustrated or by discrete components, application specific integrated circuits, processors executing appropriate software and the like or any combination thereof.

Moreover, although described in detail for purposes of clarity and understanding by way of the aforementioned embodiments, the present invention is not limited to such embodiments. It will be obvious to one of average skill in the art that various changes and modifications may be practiced within the scope of the invention, as limited only by the scope of the appended claims.

## Claims

1. An intermediate routing node (700) in a communication infrastructure, the communication infrastructure further including an end point device (131, 271, 351, 491, 541, 763, 773) and a secondary intermediate routing node (251, 253, 255, 257, 259, 451), the secondary intermediate routing node is coupled to the end point device, the intermediate routing node comprising:
an upstream communication interface circuitry (741, 751) coupled to an upstream node (743, 753);
a downstream communication interface circuitry (761, 771) coupled to the end point device; and
a processing circuitry (723) configured to generate and deliver data destined for the secondary intermediate routing node to the end point device, **characterized in that** the intermediate routing node is communicatively coupled to the secondary intermediate routing node via the upstream communication interface circuitry.

2. The intermediate routing node of claim 1, wherein the processing circuitry is further configured to deliver the data destined for the secondary intermediate routing node to the end point device based on an address of the end point device.

3. The intermediate routing node of claim 1, wherein the intermediate routing node and the secondary intermediate routing node operate pursuant to communicatively incompatible protocols.

4. The intermediate routing node of claim 1, wherein the intermediate routing node is an access point.

## Patentansprüche

1. Zwischenroutingknoten (700) in einer Kommunikationsinfrastruktur, wobei die Kommunikationsinfrastruktur des Weiteren eine Endpunktvorrichtung (131, 271, 351, 491, 541, 763, 773) und einen zweiten Zwischenroutingknoten (251, 253, 255, 257, 259, 451) aufweist, wobei der zweite Zwischenroutingknoten mit der Endpunktvorrichtung verbunden ist, wobei der Zwischenroutingknoten aufweist:
eine Upstream-Kommunikationsschnittstellenschaltung (741, 751), die mit einem Upstream-Knoten verbunden ist (743, 753);
eine Downstream-Kommunikationsschnittstellenschaltung (761, 771), die mit der Endpunktvorrichtung verbunden ist; und
eine Verarbeitungsschaltung (723), die dazu konfiguriert ist, Daten, die für den zweiten Zwischenroutingknoten bestimmt sind, zu erzeugen und an die Endpunktvorrichtung zu senden,
**dadurch gekennzeichnet, dass**
der Zwischenroutingknoten kommunikativ mit dem zweiten Zwischenroutingknoten über die Upstream-Kommunikationsschnittstellenschaltung verbunden ist.

2. Zwischenroutingknoten nach Anspruch 1, wobei die Verarbeitungsschaltung des Weiteren dazu konfiguriert ist, die für den zweiten Zwischenroutingknoten bestimmten Daten an die Endpunktvorrichtung basierend auf einer Adresse der Endpunktvorrichtung zu senden.

3. Zwischenroutingknoten nach Anspruch 1, wobei der Zwischenroutingknoten und der zweite Zwischenroutingknoten gemäß kommunikativ inkompatiblen Protokollen arbeiten.

4. Zwischenroutingknoten nach Anspruch 1, wobei der Zwischenroutingknoten ein Zugangspunkt ist.

## Revendications

1. Noeud intermédiaire d'acheminement (700) dans une infrastructure de communication, l'infrastructure de communication incluant en outre un dispositif de point d'extrémité (131, 271, 351, 491, 541, 763, 773) et un noeud intermédiaire d'acheminement secondaire (251, 253, 255, 257, 259, 451), le noeud intermédiaire d'acheminement secondaire est couplé au dispositif de point d'extrémité, le noeud intermédiaire d'acheminement comprenant :
un ensemble de circuits (741, 751) d'interface de communication amont couplé à un noeud amont (743, 753) ;
un ensemble de circuits (761, 771) d'interface de communication aval couplé au dispositif de point d'extrémité ; et
un ensemble de circuits (723) de traitement configuré pour générer et délivrer des données destinées au noeud intermédiaire d'acheminement secondaire au dispositif de point d'extrémité, **caractérisé en ce que** le noeud intermédiaire d'acheminement est couplé en communication au noeud intermédiaire d'acheminement secondaire par l'intermédiaire de l'ensemble de circuits d'interface de communication amont.

2. Noeud intermédiaire d'acheminement selon la revendication 1, dans lequel l'ensemble de circuits de traitement est en outre configuré pour délivrer les données destinées au noeud intermédiaire d'acheminement secondaire au dispositif de point d'extrémité sur la base d'une adresse du dispositif de point d'extrémité.

3. Noeud intermédiaire d'acheminement selon la revendication 1, dans lequel le noeud intermédiaire d'acheminement et le noeud intermédiaire d'acheminement secondaire fonctionnent conformément à des protocoles incompatibles en communication.

4. Noeud intermédiaire d'acheminement selon la revendication 1, dans lequel le noeud intermédiaire d'acheminement est un point d'accès.
